# EUROPEAN PATENT APPLICATION

(11) **EP 4 722 759 A1**
(43) Date of publication of application: **08.04.2026**
(21) Application number: 25201014.5
(22) Date of filing: 09.09.2025
(51) Int. Cl.: G01S 13/91

(54) **APPARATUSES, COMPUTER-IMPLEMENTED METHODS, AND COMPUTER PROGRAM PRODUCTS FOR LANDING SITE ALIGNMENT**

(30) Priority: 04.10.2024 IN 202411075198; 02.12.2024 US 202418965279
(71) Applicant: Honeywell International Inc., Charlotte, NC 28202 (US)
(72) Inventor: CHAUHAN, Alok, Charlotte, 28202 (US); SIRIPURAPU, Venkata, Charlotte, 28202 (US); KANCHERLA, Madhusudhana, Charlotte, 28202 (US)
(74) Representative: Haseltine Lake Kempner LLP

(57) **Abstract**

Embodiments of the disclosure provide for improving alignment of a vehicle to a landing site. In the context of a method, the method includes generating transmission signals via a radar altimeter onboard a vehicle, the vehicle being oriented proximate to a landing site comprising a plurality of radio-reflective targets; receiving, via the radar altimeter, a plurality of reflected signals; generating a plurality of power metrics based on the plurality of reflected signals; comparing the plurality of power metrics to a threshold to determine a subset of power metrics associated with the radio-reflective targets; generating alignment correction data based on respective difference values between the subset of power metrics; and causing output of the alignment correction data to a ground station or a control system onboard the vehicle, wherein the alignment correction data comprises at least one parameter for aligning the vehicle with the landing site to minimize the difference values.

## Description

### CROSS REFERENCE TO RELATED APPLICATIONS

This application claims the benefit of and priority to India Patent Application No. 202411075198, filed October 4, 2024, entitled "APPARATUSES, COMPUTER-IMPLEMENTED METHODS, AND COMPUTER PROGRAM PRODUCTS FOR LANDING SITE ALIGNMENT," the disclosure of which is incorporated herein by reference in its entirety.

### TECHNOLOGICAL FIELD

Embodiments of the present disclosure are generally directed to aligning a vehicle to a landing site.

### BACKGROUND

Typical approaches to aligning vehicle to a landing site rely upon visual observation by a vehicle operator and/or signal data from a satellite system, such as global positioning system (GPS) data. For example, a vehicle operator may navigate a vehicle into alignment with a landing site based on direct observation of the landing site or a video feed of the landing site. However, the visibility of a landing site may be reduced outside of daylight hours or due to environmental conditions, such as precipitation, dust, and/or the like. Other imaging approaches may rely upon retrofitting vehicles with costly sensors systems, such as light detection and ranging (LIDAR) modules. In another example, a vehicle may be steered toward a landing site based on GPS navigation information; however, satellite-based signals may experience interference or blockage by infrastructure adjacent to the landing site. As a result, alignment approaches that rely upon satellite systems may demonstrate reliability issues in dense urban environments or regions in which direct satellite coverage is limited.

Applicant has discovered various technical problems associated with accurately aligning a vehicle to a landing site. Through applied effort, ingenuity, and innovation, Applicant has solved many of these identified problems by developing the embodiments of the present disclosure, which are described in detail below.

### BRIEF SUMMARY

In general, embodiments of the present disclosure herein provide for aligning a vehicle to a landing site based on strength of reflected radar altimeter signals. For example, embodiments of the present disclosure utilize an onboard radar altimeter to generative corrective guidance and control commands for realigning a vehicle relative in accordance with a landing site. The vehicle may generate alignment correction data based at least in part on radar altimeter signals reflected from a plurality of radio-reflective targets arranged equidistant around a landing site. The alignment correction data may include one or more parameters that define an adjustment to the position of the vehicle such that respective differences in the strength of the reflected signals are minimized. The minimization of difference across the reflected signals may correspond to optimal alignment between the vehicle and the landing site within the arrangement of radio-reflective targets. The corrective guidance may be rendered on a display of a ground station configured to control the vehicle. Additionally, or alternatively, the control command may be executed by the vehicle to adjust the position of the vehicle relative to the landing site. Other implementations for radar altimeter-based landing site alignment will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a computer-implemented method for improved landing site alignment is provided. The computer-implemented method is executable utilizing any of a myriad of computing device(s) and/or combinations of hardware, software, firmware. In some example embodiments an example computer-implemented method includes generating a transmission signal via a radar altimeter onboard a vehicle, the vehicle being oriented proximate to a landing site comprising a plurality of radio-reflective targets; receiving, via the radar altimeter, a plurality of reflected signals; generating a plurality of power metrics based at least in part on the plurality of reflected signals; comparing the plurality of power metrics to at least one threshold to determine a subset of power metrics that are associated with the plurality of radio-reflective targets; generating alignment correction data based at least in part on respective difference values between the subset of power metrics; and causing output of the alignment correction data to at least one of a ground station configured to control the vehicle or a control system onboard the vehicle, wherein the alignment correction data comprises at least one parameter for aligning the vehicle with the landing site to minimize the respective difference values.

In some embodiments, the at least one parameter comprises corrective guidance configured to align the vehicle with the landing site to minimize the respective difference values. In some embodiments, the method further comprises provisioning the alignment correction data to the ground station to cause rendering of the corrective guidance on at least one display of the ground station. In some embodiments, the method further comprises causing output of at least one audio effect at the ground station, wherein the at least one audio effect comprises a computer voice instruction based at least in part on the corrective guidance.

In some embodiments, the at least one parameter comprises a control command configured to, in execution with a control system onboard the vehicle, align the vehicle with the landing site to minimize the respective difference values. In some embodiments, the method further comprises executing the control command via the control system onboard the vehicle to align the vehicle to the landing site. In some embodiments, the method further comprises provisioning to the ground station a request to execute the control command; and executing the control command via the control system onboard the vehicle in response to receiving an approval of the request from the ground station. In some embodiments, the method further comprises applying fast Fourier transformation (FFT) to the plurality of reflected signals to generate the plurality of power metrics, wherein a respective power metric comprises an FFT bin. In some embodiments, the method further comprises iteratively updating the respective difference values based at least in part on additional reflected signals received via the radar altimeter during movement of the vehicle in accordance with the alignment correction data; and causing additional movement of the vehicle along a horizontal plane in at least one of a forward, rearward, leftward, or rightward direction to reduce the respective difference values.

In some embodiments, the method further comprises generating a position of the vehicle relative to the landing site based at least in part on the respective difference values, wherein the position comprises a vertical component and a horizontal component; and provisioning the position to a vehicle traffic system. In some embodiments, the method further comprises transitioning the radar altimeter from a depowered state to a powered state in response to a determination that the vehicle is located within a predetermined proximity of the landing site. In some embodiments, the at least one parameter comprises at least one movement direction along a horizontal plane. In some embodiments, the at least one parameter comprises at least one movement distance in accordance with the at least one movement direction.

In some embodiments, the method further comprises storing a plurality of power metric thresholds, wherein a respective power metric threshold is associated with one of a plurality of landing sites. In some embodiments, the method further comprises generating, based at least in part on a location of the vehicle, a respective distance between the vehicle and the plurality of landing sites; determining a nearest landing site based at least in part on the distances; and retrieving the at least one threshold from the at least one non-transitory memory based at least in part on the nearest landing site. In some embodiments, the plurality of landing sites comprises a first landing site and a second landing site; the first landing site comprises a first plurality of radio-reflective targets associated with a first separation distance; the second landing site comprises a second plurality of radio-reflective targets associated with a second separation distance that is different from the first separation distance; and the first landing site and the second landing site are associated with different values of power metric threshold.

In some embodiments, the method further comprises updating the respective difference values based at least in part on additional reflected signals received via the radar altimeter during movement of the vehicle in accordance with the alignment correction data; and in response to a determination that the respective difference values are less than a threshold difference, causing the vehicle to land on the landing site. In some embodiments, the method further comprises, in response to a determination that the respective difference values are less than a threshold difference, provisioning to the ground station an indication that the vehicle is in alignment with the landing site.

In some embodiments, the method further comprises provisioning an alert to at least one of ground station or vehicle traffic system in response to determining that a total quantity of the subset of power metrics is less than a threshold quantity. In some embodiments, the plurality of radio-reflective targets comprises at least four radio-reflective targets; and the at least four radio-reflective targets are arranged equidistant from one another and a centroid of the landing site.

In accordance with another aspect of the present disclosure, a computing apparatus for improved landing site alignment is provided. The computing apparatus in some embodiments includes at least one processor and at least one non-transitory memory, the at least non-transitory one memory having computer-coded instructions stored thereon. The computer-coded instructions in execution with the at least one processor causes the apparatus to perform any one of the example computer-implemented methods described herein. In some other embodiments, the computing apparatus includes means for performing each step of any of the computer-implemented methods described herein.

In accordance with another aspect of the present disclosure, a computer program product for improved landing site alignment is provided. The computer program product in some embodiments includes at least one non-transitory computer-readable storage medium having computer program code stored thereon. The computer program code in execution with at least one processor is configured for performing any one of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a network environment that may be specially configured within which embodiments of the present disclosure may operate.
FIG. 2 illustrates a block diagram of an example apparatus that may be specially configured in accordance with at least some example embodiments of the present disclosure.
FIG. 3 illustrates an example data architecture in accordance with at least some example embodiments of the present disclosure.
FIG. 4 illustrates an example workflow for aligning a vehicle to a landing site in accordance with at least some example embodiments of the present disclosure.
FIG. 5 illustrates a flowchart depicting operations of an example process for aligning a vehicle to a landing site in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

Embodiments of the present disclosure provide a myriad of technical advantages in the technical field of aligning a vehicle to a landing site. Typically, landing site alignment is performed using satellite navigation information, imaging systems, or direct observation of the vehicle and landing site. For example, a vehicle may be outfitted with cameras that stream a video feed to a vehicle operator such that the vehicle operator may observe proximity and alignment of the vehicle to a landing site. In such approaches, the cameras may be vulnerable to low light conditions, precipitation (e.g., rain, fog, snow, sleet), dust, and/or the like. As a result, the utility of camera-based approaches may be limited to daytime and fair-weather conditions. Other approaches may rely upon LIDAR systems and/or the like; however, such systems are costly and may require significant computing power to process sensor data and image a local environment. Additional approaches that rely upon GPS or other satellite-based position signals may be vulnerable to signal disruptions or interference.

Embodiments of the present disclosure overcome the technical challenges of accurately aligning a vehicle to a landing site by generating alignment corrections based at least in part on reflected radar altimeter signals. The various embodiments of the present disclosure may generate transmission signals, and a subset of the transmission signals may reflect off a plurality of radio-reflective targets arranged around a perimeter of a landing site. The present methods, apparatuses, and computer program products may generate a plurality of power metrics based at least in part on the reflected signals. A subset of power metrics associated with the radio-reflective targets may be determined based at least in part on comparing the power metrics to one or more power thresholds.

The present methods, apparatuses, and computer program products may generate respective difference values between the subset of power metrics. The misalignment between the vehicle and the landing site may be proportional to the magnitude of difference between the subset of power metrics. For example, the radio-reflective targets may be spaced equidistant from one another and the landing site such that, when the vehicle is aligned over a centroid of the landing site, the power differences of radar altimeter signals reflected off the plurality of radio-reflective targets are minimized. In this manner, the present methods, apparatuses, and computer program products may estimate misalignment of the vehicle and landing site based at least in part on comparing the respective difference values for the subset of radar altimeter signals reflected from the radio-reflective targets.

In various embodiments, the methods, apparatuses, and computer program products generate corrective guidance, control commands, and/or the like, based at least in part on the respective difference values. The corrective guidance, control command, and/or the like may be configured for causing realignment the vehicle relative to the landing site such that respective difference values between the subset of reflected radar signals are minimized. In doing so, the method, apparatus, and computer program product may enable accurate alignment of the vehicle to the landing site. The present techniques may overcome disadvantages of visual or image-based approaches by providing accurate landing site guidance by means that are unaffected by precipitation, light levels, and/or the like. Further, the present techniques may avoid vulnerabilities of satellite positioning-based approaches, such as lack of satellite coverage, signal blockage, signal interference, and/or the like. Additionally, the adaptation of the onboard radar altimeter for landing alignment purposes may conserve weight of the vehicle as compared to approaches that rely upon affixing cameras, LIDAR systems, and/or the like to the vehicle.

### Definitions

"Vehicle" refers to any apparatus that traverses throughout an environment by any mean of travel. In some contexts, a vehicle transports goods, persons, and/or the like, or traverses itself throughout an environment for any other purpose, by means of air, sea, or land. In some embodiments, a vehicle is ground-based, air-based, water-based, space-based (e.g., outer space or within an orbit of a planetary body, a natural satellite, or artificial satellite), and/or the like. In some embodiments, the vehicle is an aerial vehicle capable of air travel. Non-limiting examples of aerial vehicles include urban air mobility vehicles, drones, helicopters, fully autonomous air vehicles, semi-autonomous air vehicles, airplanes, orbital craft, spacecraft, and/or the like. In some embodiments, the vehicle is piloted by a human operator onboard the vehicle. For example, in an aerial context, the vehicle may be a commercial airliner operated by a flight crew. In some embodiments, the vehicle is remotely controllable such that a remote operator may initiate and direct movement of the vehicle. Additionally, in some embodiments, the vehicle is unmanned. For example, the vehicle may be a powered, aerial vehicle that does not carry a human operator and is piloted by a remote operator using a control station. In some embodiments, the vehicle is an aquatic vehicle capable of surface or subsurface travel through and/or atop a liquid medium (e.g., water, water-ammonia solution, other water mixtures, and/or the like). Non-limiting examples of aquatic vehicles include unmanned underwater vehicles (UUVs), surface watercraft (e.g., boats, jet skis, and/or the like), amphibious watercraft, hovercraft, hydrofoil craft, and/or the like. As used herein, vehicle may refer to vehicles associated with advanced air mobility (AAM).

"AAM" refers to advanced air mobility, which includes all aerial vehicles and functions for aerial vehicles that are capable of performing vertical takeoff and/or vertical landing procedures. Non-limiting examples of AAM aerial vehicles include passenger transport vehicles, cargo transport vehicles, small package delivery vehicles, unmanned aerial system services, autonomous drone vehicles, and ground-piloted drone vehicles, where any such vehicle is capable of performing vertical takeoff and/or vertical landing.

"Radar altimeter" refers to any electronic device configured to determine the distance between a vehicle and terrain beneath the vehicle based on transmission of radio signals and measurement of reflected radio signals. For example, a radar altimeter may include a frequency modulated continuous wave (FMCW) radar system. In various embodiments, a radar altimeter is configured to generate and emit transmission signals at a beamwidth of 30 to 60 degrees. In doing so, a subset of the transmission signals may be emitted toward terrain that is off-center from a vertical axis extending beneath the vehicle. The subset of transmission signals may embody a conical shape extending outward beneath the vehicle such that terrain adjacent to the vertical axis may be contacted by and reflect the transmission signals. The present techniques may measure the reflected signals, determine a subset of reflected signals associated with radio-reflective targets positioned equidistant around a landing site, and generate alignment correction data configured to minimize respective differences between the power of the reflected signals. In doing so, the present techniques may generate guidance or commands for repositioning the vehicle to a position that is equidistant from the radio-reflective signals, which may be in alignment with the centroid of the landing site. In this manner, the present techniques may align a vehicle to a landing site based at least in part on signal data obtained via the radar altimeter.

### Example Systems and Apparatuses of the Disclosure

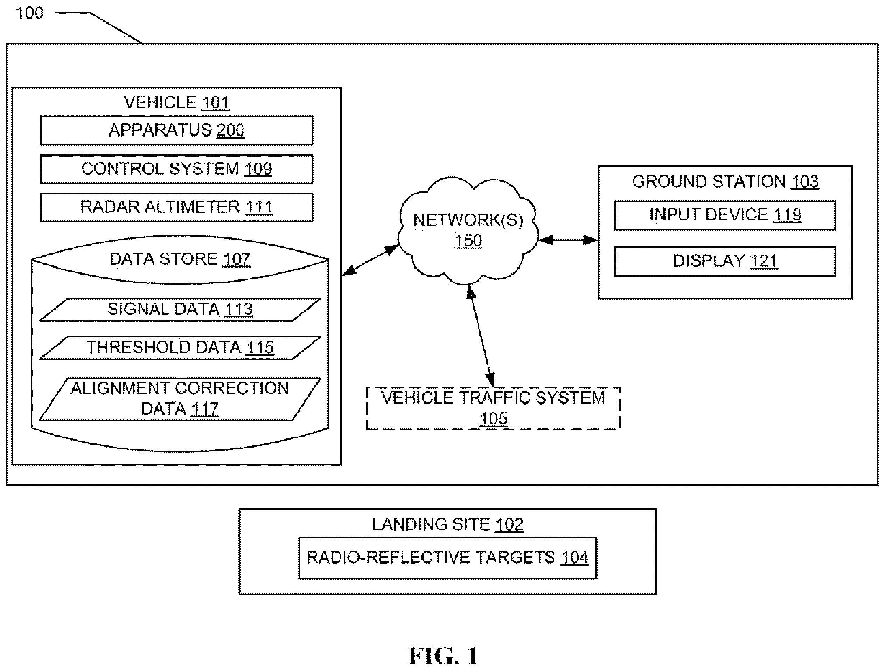

FIG. 1 illustrates a block diagram of a network environment that may be specially configured within which embodiments of the present disclosure may operate. Specifically, FIG. 1 depicts an example networked environment 100. As illustrated, the networked environment 100 includes one or more vehicles 101, a ground station 103, and, optionally, one or more vehicle traffic systems 105.

In some embodiments, the vehicle 101 includes an apparatus 200 configured to perform various functions and actions related to enacting techniques and processes described herein for aligning a vehicle 101 to a landing site 102 based at least in part on radar altimeter signals. In some embodiments, the vehicle 101 includes one or more data stores 107. The various data in the data store 107 may be accessible to one or more of the apparatus 200, the ground station 103, and/or the like. Additionally, or alternatively, in some embodiments, the ground station 103 includes an apparatus 200 and data store 107 as described herein. The data store 107 may be representative of a plurality of data stores 107 as can be appreciated. The data stored in the data store 107, for example, is associated with the operation of the various applications, apparatuses, and/or functional entities described herein. The data stored in the data store 107 may include, for example, signal data 113, threshold data 115, alignment correction data 117, and/or the like.

In some embodiments, the signal data 113 includes data associated with transmission signals generated and reflected signals received by a radar altimeter 111. For example, the signal data 113 may include measures of signal strength, received or transmitted signal direction, and/or the like. In some embodiments, the signal data 113 includes power metrics that quantify respective powers, frequences, ranges, and/or the like of reflected signals measured by the radar altimeter 111. In some embodiments, the signal data 113 includes respective difference values between power metrics of a plurality of reflected signals. For example, the signal data 113 may include respective difference values that are generated based at least in part on reflected signals received from radio-reflective targets 104.

In some embodiments, threshold data 115 includes one or more thresholds configured for determining subsets of reflected signals that are associated with radio-reflective targets 104, terrain that is located directly beneath a vehicle, and/or the like. For example, the threshold data 115 may include threshold values or intervals of power, range, frequency, and/or the like. In some embodiments, the threshold data 115 includes a plurality of thresholds, where subsets of the plurality of thresholds are associated with different landing sites 102. For example, the threshold data 115 may include a first power threshold associated with a first landing site 102 and a first set of radio-reflective targets 104 arranged around the first landing site 102. The threshold data 115 may further include a second power threshold associated with a second landing site 102 and a second set of radio-reflective targets 104 arranged around the second landing site 102. The first power threshold may be different from the second power threshold based at least in part on respective differences in the distance between a centroid of the landing site and the corresponding set of radio-reflective targets at the first and second landing sites.

In some embodiments, alignment correction data 117 includes data configured to direct a vehicle into alignment with a landing site 102 based at least in part on respective differences between power metrics of radar altimeter signals reflected from radio-reflective targets 104. In some embodiments, the alignment correction data 117 includes control commands that may be executed to adjust a position of a vehicle along a horizontal plane, vertical plane, and/or the like such that, upon repositioning, respective differences in the power metrics of the reflected signals are minimized (e.g., which may correspond to an alignment of the vehicle with a centroid of the landing site 102). In some embodiments, the alignment correction data 117 includes corrective guidance that may be rendered on a display of a vehicle 101, ground station 103, and/or the like. The corrective guidance may comprise visual information for directing realignment of the vehicle 101 relative to the landing site 102. For example, the corrective guidance may comprise one or more indicia indicative of movement direction, movement magnitude (e.g., distance, displacement, and/or the like), location of the vehicle 101 relative to the landing site 102, and/or the like. In some embodiments, the corrective guidance includes an executable control command for approval.

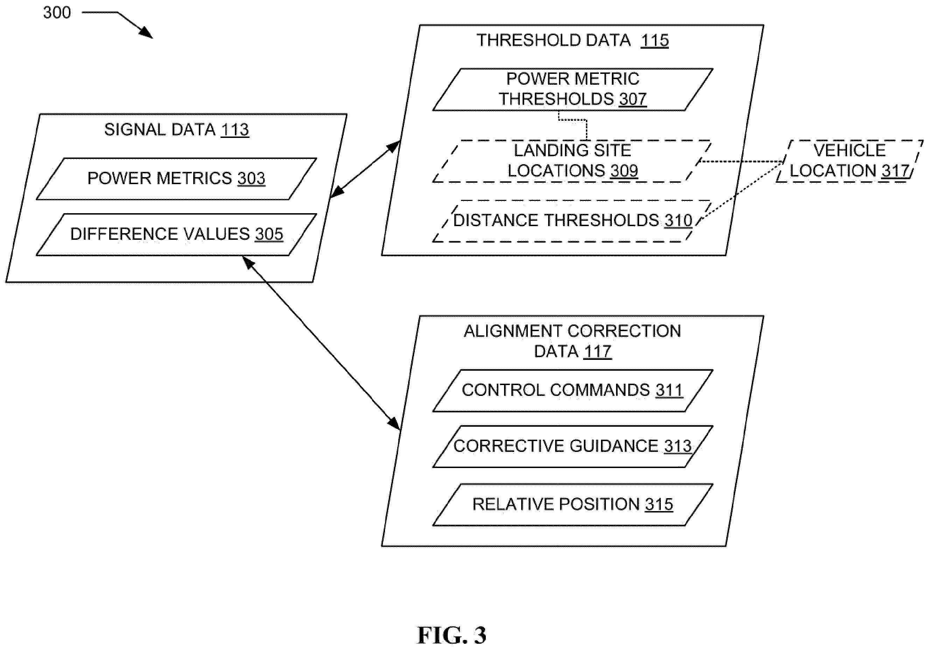

Additional example aspects of the signal data 113, threshold data 115, and alignment correction data 117 are shown in the data architecture 300 depicted in FIG. 3 and described herein. Additionally, in some embodiments, the data store 107 is configured to store a location of the vehicle 101, travel pathway of the vehicle 101, and/or the like. For example, the data store 107 may store a real-time location of the vehicle 101, which is generated by a satellite-based position system aboard the vehicle 101. As another example, the data store 107 may store a travel pathway of the vehicle 101, where the travel pathway comprises one or more identifiers for a landing site 102 designated for the vehicle 101.

In some embodiments, the vehicle 101 includes a control system 109 configured to control operation of the vehicle 101. For example, the control system 109 may be configured to control rotor speed, rotor orientation, thrust engines, flaps, brakes, and/or the like. In some embodiments, the control system 109 comprises an autopilot embodied in firmware, software, hardware, and/or the like such that the control system 109 may autonomously navigate the vehicle 101, automatically execute control commands generated by the apparatus 200, and/or the like. Additionally, or alternatively, in some embodiments, the control system 109 is configured to execute control commands received by the apparatus 200 from a ground station 103. In various embodiments, the vehicle 101 includes one or more sensors, systems, and/or the like configured to determine a physical position of the vehicle 101. For example, the vehicle 101 may include one or more satellite-based positioning systems configured to generate a geographic orientation of a vehicle, such as a GPS module.

In various embodiments, the vehicle 101 includes one or more radar altimeters 111. In some embodiments, the apparatus 200 is configured to transition the radar altimeter 111 between a depowered state and a powered state. In doing so, the apparatus 200 may conserve energy expenditure of the vehicle 101. In some embodiments, the apparatus 200 is configured to transition the radar altimeter to the powered state in response to determining that the position of the vehicle is within a threshold range of a landing site 102. In various embodiments, in the powered state, the radar altimeter 111 is configured to generate and emit transmission signals. For example, the radar altimeter 111 may generate and emit transmission signals beneath the vehicle 101 such that the transmission signals are directed toward terrain beneath the vehicle 101. The transmission signals may contact and be reflected by the terrain (whereafter such signals are referred to as "reflected signals").

Typically, a radar altimeter is used to determine the altitude of the vehicle 101 relative to terrain beneath the vehicle by measuring the strength of reflected signals. The methods, apparatuses, and computer program products described herein extend functionality of the radar altimeter 111 such that the reflected signals from a plurality of radio-reflective targets 104 may be utilized to determine an alignment of the vehicle 101 relative to a landing site 102. For example, based at least in part on reflected signal strengths and values of difference therebetween, the apparatus 200 may generate a position of the vehicle 101 relative to the landing site 102, said position comprising a vertical component and a horizontal component.

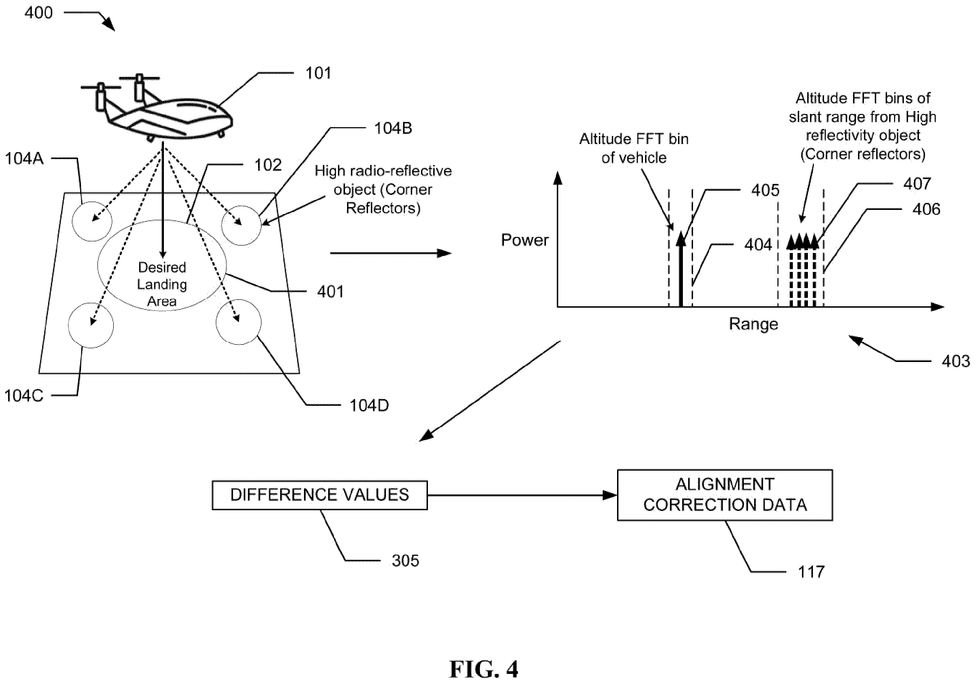

In some embodiments, the apparatus 200, radar altimeter 111, and/or the like is/are configured to generate one or more power metrics for a respective reflected signal. In some embodiments, the apparatus 200 is configured to apply a fast Fourier transformation (FFT) to reflected signals to generate a plurality of power metrics. A power metric for a reflected signal may comprise a signal power, signal frequency, signal range, and/or the like (see chart 403 shown in FIG. 4). In some embodiments, the apparatus 200 is configured to determine a subset of the power metrics that are associated with reflected signals received from the radio-reflective targets 104. In some embodiments, the apparatus 200 determines the subset of power metrics based at least in part on comparing the power metrics to one or more thresholds. For example, the apparatus 200 may apply FFT to a plurality of reflected signals to generate a plurality of FFT bins. The apparatus 200 may compare the plurality of FFT bins to a frequency threshold, power threshold, and/or the like to determine a subset of FFT bins that are associated with reflected signals from radio-reflective targets 104.

In some embodiments, the apparatus 200 is configured to generative respective difference values between the subset of power metrics associated with radio-reflective targets 104. For example, the apparatus 200 may compare the power metrics to one another to generate a plurality of difference values. In various embodiments, the apparatus 200 is configured to generate alignment correction data 117 based at least in part on the difference values. In some embodiments, the apparatus 200 is configured to estimate respective positions of the radio-reflective targets 104 relative to the vehicle 101 based at least in part on the difference values. In this manner, greater values of difference may indicate greater misalignment of the vehicle 101 from the landing site 102. In some embodiments, the apparatus 200 is configured to generate alignment correction data 117 based at least in part on the difference values. For example, the apparatus 200 may generate a movement direction for repositioning the vehicle 101 into an orientation at which the difference values of subsequent reflected signals of the radio-reflective targets 104 may be minimized. In various embodiments, the apparatus 200 generates alignment data 117 that comprises forward, leftward, rightward, or rearward movement directions. In some embodiments, the apparatus 200 generates a movement distance in accordance with the movement direction and minimization of difference values.

In some embodiments, the apparatus 200 is configured to generate corrective guidance, one or more control commands, and/or the like. In some embodiments, the apparatus 200 is configured to cause execution of a control command by the control system 109. In doing so, the apparatus 200 may cause the vehicle 101 to be repositioned in accordance with a movement direction, movement distance, and/or the like that minimizes respective difference values between the power metrics of reflected signals from the radio-reflective targets 104. In doing so, the apparatus 200 may reposition the vehicle 101 into an alignment with a centroid of the landing site 102. In some embodiments, the apparatus 200 is configured to provision the control command to a ground station 103 for approval. The apparatus 200 may cause the control system 109 to execute the control command in response to receiving approval from the ground station 103.

In some embodiments, the apparatus 200 is configured to cause rendering of the corrective guidance on one or more displays of the vehicle 101, ground station 103, and/or the like. For example, the apparatus 200 may provision corrective guidance to a ground station 103 to cause the ground station 103 to render a graphical user interface (GUI) on a display 119. The GUI may comprise a movement direction, movement distance, relative location of the vehicle 101 (e.g., respective to the landing site 102 and/or radio-reflective targets, and/or the like. In some embodiments, the apparatus 200 is configured to generate additional alignment correction data 117 based at least in part on additional received signals and power metrics derived therefrom. In some embodiments, the apparatus 200 is configured to determine whether subsequent movement of the vehicle 101 has resulted in a minimization of difference values such that a predetermined difference threshold is satisfied. In some embodiments, the apparatus 200 is configured to iteratively process reflected altimeter signals to determine whether the vehicle 101 is aligned with the landing site 102. The apparatus 200 may iteratively output alignment correction data 117 to the vehicle 101, ground station 103, and/or the like to further correct alignment of the vehicle 101 relative to the landing site 102.

Additionally, or alternatively, in some embodiments, the apparatus 200 may cause output of one or more audio effects within the vehicle 101 or at the ground station 103. The audio effect may be generated by a computer voice module, and/or the like, based at least in part on the alignment correction data 117. In some embodiments, the audio effect comprises an utterance of a movement direction, movement distance, and/or the like. For example, the audio effect may comprise a computer voice utterance of "move left," "move back," "move forward," "move rightward," and/or the like. In another example, the apparatus 200 may cause dynamic updating of the audio effects based at least in part on additional received signals such that the apparatus 200 may cause output of an audio effect indicating that the vehicle 101 is aligned with the landing site 102.

In some embodiments, the apparatus 200 is configured to provision a relative position of the vehicle 101 to a vehicle traffic system 105. For example, the apparatus 200 may provision to the vehicle traffic system 105 a position of the vehicle 101 relative to the landing site 102. In doing so, the vehicle 101 may enable the vehicle traffic system 105 to monitor the landing process of the vehicle 101 and coordinate vehicle traffic or ground services in accordance with the position of the vehicle 101. For example, the apparatus 200 may cause the vehicle traffic system 105 to communicate the relative location of the vehicle 101 to additional vehicles, ground stations 103, and/or the like.

In some embodiments, the ground station 103 is configured to provide data to and receive data from one or more vehicles 101, one or more vehicle traffic systems 105, and/or the like. For example, the ground station 103 may include any number of computing device(s) and/or other system(s) embodied in hardware, software, firmware, and/or the like that communicate with, monitor, and/or control a vehicle 101. In some embodiments, ground station 103 includes an apparatus 200. For example, generation of alignment correction data 117 may be performed by the ground station 103 in at least some embodiments of the present disclosure. In various embodiments, the ground station 103 includes one or more displays 119 on which graphical user interfaces (GUIs) and other information related to landing site alignment may be rendered. In some embodiments, the display 119 includes a CRT (cathode ray tube), LCD (liquid crystal display) monitor, LED (light-emitting diode) monitor, and/or the like, for displaying information/data to a ground station operating entity.

In some embodiments, the ground station 103 includes one or more input devices 121 for receiving user inputs. For example, the input device 121 may receive commands to control an unmanned vehicle, approve or disapprove a control command, and/or the like. The input device 121 may include any number of devices that enable human-machine interface (HMI) between a ground station operating entity and the ground station 103, such as interaction of a ground station operating entity with GUIs rendered on the display 119. In some embodiments, the input device 121 includes one or more buttons, cursor devices, joysticks, touch screens, including three-dimensional or pressure-based touch screens, camera, finger-print scanners, accelerometer, retinal scanner, gyroscope, magnetometer, or other input devices. In some embodiments, the input device 121 includes one or more vehicle controls (e.g., joysticks, thumbsticks, yokes, steering wheels, accelerator control, thrust control, brake control, and/or the like) that enable a ground station operating entity to remotely control and navigate one or more vehicles 101.

In some embodiments, the vehicle traffic system 105 includes any number of computing device(s) and/or other system(s) embodied in hardware, software, firmware, and/or the like that monitor vehicle traffic in association with one or more landing sites 102. For example, the vehicle traffic system 105 may embody an air traffic controller (ATC) that monitors movement of aircraft within a region of airspace. In some embodiments, the vehicle traffic system 105 is configured to receive alignment correction data 117 from the apparatus 200, ground station 103, and/or the like. For example, the vehicle traffic system 105 may receive a geographic position of the vehicle 101 and/or a position of the vehicle 101 relative to a landing site 102. As another example, the vehicle traffic system 105 may receive corrective guidance, control commands, and/or the like. In some embodiments, the vehicle traffic system 105 is configured to provision vehicle locations to a plurality of vehicles 101. In some embodiments, the vehicle traffic system 105 is configured to provide approval or disapproval of a control command to the apparatus 200.

In some embodiments, the ground station 103, vehicle 101, and, optionally, vehicle traffic system 105 are communicable over one or more communications network(s), for example the communications network(s) 150. It should be appreciated that the communications network 150 in some embodiments is embodied in any of a myriad of network configurations. In some embodiments, the communications network 150 embodies a public network (e.g., the Internet). In some embodiments, the communications network 150 embodies a private network (e.g., an internal, localized, and/or closed-off network between particular devices). In some other embodiments, the communications network 150 embodies a hybrid network (e.g., a network enabling internal communications between particular connected devices and external communications with other devices). In some embodiments, the communications network 150 embodies a satellite-based communication network. Additionally, or alternatively, in some embodiments, the communications network 150 embodies a radio-based communication network that enables communication between the apparatus 200, the ground station 103, the vehicle traffic system 105, and/or the like. For example, the apparatus 200 may provision alignment correction data 117 to a ground station 103 via a transponder, communication gateway, and/or the like. The communications network 150 in some embodiments may include one or more transponders, satellites, base station(s), relay(s), router(s), switch(es), cell tower(s), communications cable(s) and/or associated routing station(s), and/or the like. In some embodiments, the communications network 150 includes one or more user-controlled computing device(s) (e.g., a user owner router and/or modem) and/or one or more external utility devices (e.g., Internet service provider communication tower(s) and/or other device(s)).

Each of the components of the system communicatively coupled to transmit data to and/or receive data from one another over the same or different wireless or wired networks embodying the communications network 150. Such configuration(s) include, without limitation, a wired or wireless Personal Area Network (PAN), Local Area Network (LAN), Metropolitan Area Network (MAN), Wide Area Network (WAN), satellite network, radio network, and/or the like. Additionally, while FIG. 1 illustrate certain system entities as separate, standalone entities communicating over the communications network 150, the various embodiments are not limited to this particular architecture. In other embodiments, one or more computing entities share one or more components, hardware, and/or the like, or otherwise are embodied by a single computing device such that connection(s) between the computing entities are over the communications network 150 are altered and/or rendered unnecessary.

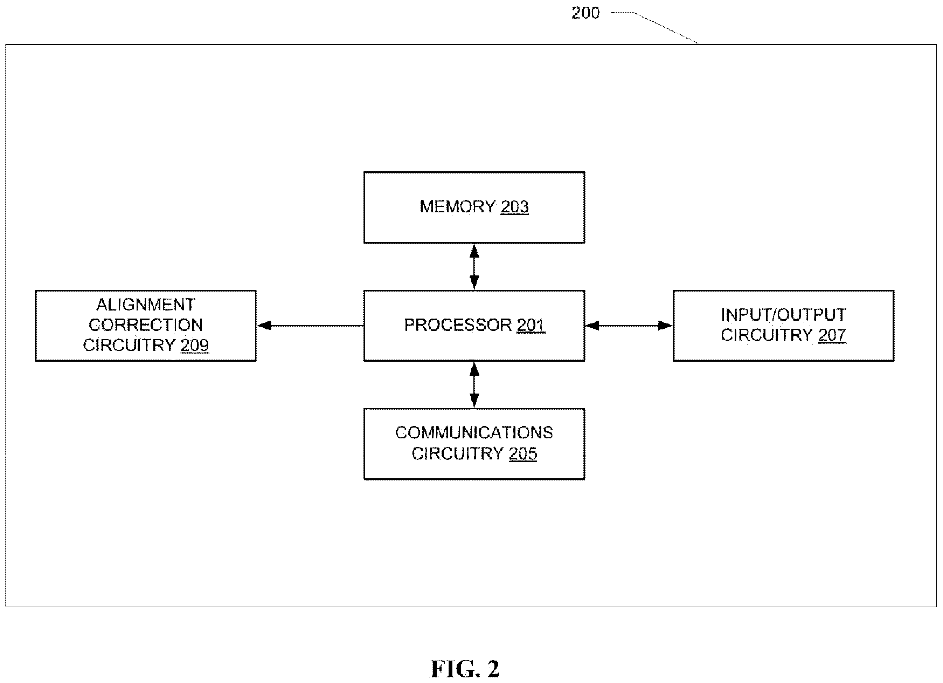

FIG. 2 illustrates a block diagram of an example apparatus 200 that may be specially configured in accordance with at least some example embodiments of the present disclosure. The apparatus 200 may carry out functionality and processes described herein to process reflected radar altimeter signals, generate power metrics and difference values, generate alignment correction data, and/or the like. In some embodiments, the apparatus 200 includes a processor 201, memory 203, communications circuitry 205, input/output circuitry 207, and alignment correction circuitry 209. In some embodiments, the apparatus 200 is configured, using one or more of the processor 201, memory 203, communications circuitry 205, input/output circuitry 207, and/or alignment correction circuitry 209, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, controlling, modifying, restoring, processing, displaying, storing, determining, creating/generating, predicting, monitoring, evaluating, comparing, and/or similar terms used herein interchangeably. In one embodiment, these functions, operations, and/or processes may be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

In some embodiments, the processor 201 (and/or co-processor or any other processing circuitry assisting or otherwise associated with the processor) is/are in communication with the memory 203 via a bus for passing information among components of the apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the apparatus 200 to carry out various functions in accordance with example embodiments of the present disclosure (e.g., generating power metrics, difference values, alignment correction data, and/or the like). In some embodiments, the memory 203 is embodied as a data store 107 as shown in FIG. 1 and described herein. In some embodiments, the memory 203 includes signal data 113, threshold data 115, alignment correction data 117, and/or the like, as further architected in FIG. 3 and described herein.

The processor 201 may be embodied in a number of different ways. For example, in some embodiments, the processor 201 includes one or more processing devices configured to perform independently. Additionally, or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multicore processor, multiple processors internal to the apparatus 200, and/or one or more remote or "cloud" processor(s) external to the apparatus 200.

In an example embodiment, the processor 201 is configured to execute instructions stored in the memory 203 or otherwise accessible to the processor. Additionally, or alternatively, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Additionally, or alternatively, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with estimating alignment of a vehicle to a landing site and adjusting the position of the vehicle to better align with a centroid of the landing site. In some embodiments, the processor 201 includes hardware, software, firmware, and/or the like, that determine whether the vehicle 101 is within proximity of a landing site, identify the landing site based on a location of the vehicle 101, transition the radar altimeter 111 to a powered state, obtain measurements of radar signals from the radar altimeter 111, cause execution of control commands via the control system 109, cause provision of alignment correction data 117 to ground stations 103, and/or the like. For example, the processor 201 may transition the radar altimeter 111 from a depowered state to a powered state in response to determining that the position of the vehicle 101 is within a predetermined proximity of a landing site. As another example, the processor 201 may determine a one of a plurality of landing sites that is nearest to a current position of a vehicle 101. As another example, the processor 201 may cause a control system 109 to execute a control command automatically or in response to receipt of approval from a ground station 103.

In some embodiments, the apparatus 200 includes input/output circuitry 207 that provides output to a user (e.g., an operating entity of a vehicle 101 or ground station 103) and, in some embodiments, receives an indication of a user input. For example, in some contexts, the input/output circuitry 207 provides output to and receives input from one or more ground station operators, vehicles, and/or the like. In some embodiments, the input/output circuitry 207 is in communication with the processor 201 to provide such functionality. The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor 201 (e.g., memory 203, and/or the like). In some embodiments, the input/output circuitry 207 includes or utilizes a user-facing application to provide input/output functionality to a display of a ground station 103, vehicle 101 and/or other display associated with a user.

In some embodiments, the apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 205 includes, for example, a network interface for enabling communications with a wired or wireless communications network, such as the network 150 shown in FIG. 1 and described herein. Additionally, or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205 includes circuitry for interacting with the antenna(s) and/or other hardware or software to cause transmission of signals via the antenna(s) or to handle receipt of signals received via the antenna(s). In some embodiments, the communications circuitry 205 enables transmission to and/or receipt of data from a ground station 103, vehicle traffic system 105 and/or other external computing devices in communication with the apparatus 200.

The alignment correction circuitry 209 includes hardware, software, firmware, and/or a combination thereof, that carry out processes for estimating vehicle alignment to a landing site and repositioning the vehicle to improve alignment between the vehicle and the landing site. For example, in some contexts, the alignment correction circuitry 209 includes hardware, software, firmware, and/or the like, that process signal data 113 to obtain power metrics and determine a subset of power metrics associated with reflected signals from radio-reflective targets. In some embodiments, the alignment correction circuitry 209 includes hardware, software, firmware, and/or the like, that generate corrective alignment data 117 based at least in part on respective difference values between the subset of power metrics (e.g., corrective guidance, control commands, and/or the like). In some embodiments, the alignment correction circuitry 209 includes hardware, software, firmware, and/or the like, that determine whether a total quantity of the subset of power metrics satisfies a predetermined quantity threshold. In some embodiments, the alignment correction circuitry 209 is configured to generate a position of the vehicle 101 relative to a landing site. In some embodiments, the circuitry 209 is configured to determine whether the respective differences between the subset of power metrics are less than a maximum difference threshold, which may indicate that the vehicle is in alignment with the vehicle. In some embodiments, the alignment correction circuitry 209 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, and/or alignment correction circuitry 209 are combinable. Additionally, or alternatively, in some embodiments, one or more of the sets of circuitry perform some or all of the functionality described associated with another component. For example, in some embodiments, two or more of the sets of circuitry 201-209 are combined into a single module embodied in hardware, software, firmware, and/or a combination thereof. Similarly, in some embodiments, one or more of the sets of circuitry, for example the memory 203, communication interface 205, and/or alignment correction circuitry 209 is/are combined with the processor 201, such that the processor 201 performs one or more of the operations described above with respect to each of these sets of circuitry 203-209.

### Example Data Architecture and Workflow of the Disclosure

Having described example systems and apparatuses in accordance with embodiments of the present disclosure, example architectures of data in accordance with the present disclosure will now be discussed. In some embodiments, the systems and/or apparatuses described herein maintain data environment(s) that enable the workflows in accordance with the data architectures described herein. For example, in some embodiments, the systems and/or apparatuses described herein function in accordance with the data architectures depicted and described herein with respect to FIG. 3 are maintained via the apparatus 200.

FIG. 3. illustrates an example data architecture 300 in accordance with at least some example embodiments of the present disclosure. In some embodiments, the signal data 113 includes power metrics 303 and difference values 305. In some embodiments, a power metric 303 is configured to measure the strength, frequency, and/or range of a reflected radar altimeter signal. In some embodiments, a difference values 305 measures a delta between a first power metric 303 and a second power metric 303. For example, the apparatus 200 may obtain a set of four power metrics 303 based at least in part on radar altimeters reflected by four radar-reflective targets. In such context, the apparatus 200 may generate six difference values 305 based at least in part on various pairs of the power metrics 303.

In some embodiments, the threshold data 115 includes one or more power metric thresholds 307. A power metric threshold may include a predetermined value of signal strength, signal frequency, signal range, and/or the like. The threshold data 115 may include a first power metric threshold 307 configured for identifying radar altimeters signal reflected by radio-reflective targets and a second power metric threshold 307 configured for identifying radar altimeters reflected by landing site terrain. In some embodiments, the threshold data 115 includes one or more landing site locations 309. For example, a respective landing site location 309 may include a unique identifier for the landing site and a geographical position of the landing site (e.g., longitude, latitude, mapping index, and/or the like). In some embodiments, the threshold data 115 includes a plurality of power metric thresholds 307 associated with different landing site locations 309. For example, a power metric threshold 307 for a first landing site may be different from a power metric threshold 307 of a second landing site (e.g., based on varying geometries or distances of the radio-reflective targets at the associated landing site).

In some embodiments, the threshold data 115 includes one or more difference thresholds. For example, the threshold data 115 may include a minimum distance threshold associated with determining that the vehicle is in an optimal alignment with a centroid of the landing site and/or arrangement of radio-reflective targets. In some embodiments, the threshold data 115 includes one or more distance thresholds 310. For example, the threshold data 115 may include a distance threshold 310 that represents a threshold proximity to a landing site.

In some embodiments, the alignment correction data 117 is generated based at least in part on signal data 113 and threshold data 115. In some embodiments, the alignment correction data 117 includes control commands 311, corrective guidance 313, relative positions 315, and/or the like. In some embodiments, the control command 311 includes one or more executable instructions for navigating a vehicle in one or more directions and/or distances to reduce the respective differences between the power metrics of radar altimeter signals reflected by radio-reflective targets. For example, a control command 311 may include an executable instruction for causing forward, rearward, rightward, leftward, upward, and/or downward movement. In some embodiments, a control command 311 includes a respective movement distance in one or more directions. In some embodiments, corrective guidance 313 includes one or more movement directions, movement distances, relative positions 315 and/or the like, which may be provided to a vehicle operator, vehicle traffic controller, and/or the like. For example, corrective guidance 313 may include directional data for rendering on a GUI, the directional data comprising a direction of movement along a horizontal plane. As another example, the corrective guidance 313 may include a relative position 315 that indicates a position of the vehicle 101 in accordance with a centroid of a landing site 102. The relative position 315 may be rendered on a display of the vehicle 101, ground station 103, vehicle traffic system 105, and/or the like to provide a visual indication of the current alignment of the vehicle 101 to the landing site.

In some embodiments, the data store 107 is configured to store a vehicle location 317. The vehicle location 317 may include a geographic position of the vehicle 101. For example, the vehicle location 317 may include geographic coordinates, such as latitude, longitude, and/or the like. In some embodiments, the vehicle location 317 is generated by a satellite-based positioning system, such as GPS. In various embodiments, the apparatus 200 controls a power state of a radar altimeter 111 based at least in part on the vehicle location 317 and a distance threshold 310. In some embodiments, the apparatus 200 determines a nearest landing site and retrieves one or more power metric thresholds 307 based at least in part on the vehicle location 317.

FIG. 4 shows an example workflow 400 for aligning a vehicle 101 to a landing site 102. In various embodiments, a plurality of radio-reflective targets 104A, 104B, 104C, 104D are arranged a landing site 102. The radio-reflective targets 104A, 104B, 104C, 104D may be arranged equidistant from one another and a centroid of the landing site 102. In this manner, an alignment of the vehicle 101 with the centroid of the landing site 102 may result in a minimization of differences in strength between reflected radar signals from the radio-reflective targets 104A, 104B, 104C, 104D. In some embodiments, a radio-reflective target comprises a corner reflector. For, example, one or more of the radio-reflective targets 104A, 104B, 104C, 104D may include an article comprising three mutually orthogonal, intersecting reflective surfaces configured to reflect waves incident from any direction directly toward the wave source. In some embodiments, a radio-reflective target comprises one or more metallic materials that strongly reflect radio signals.

In some embodiments, the workflow 400 includes navigating the vehicle 101 within a proximity of the landing site 102. In some embodiments, the workflow 400 includes activating a radar altimeter of the vehicle 101 in response to the vehicle 101 moving within a predetermined distance of the landing site 102. In various embodiments, the workflow 400 includes generating a plurality of transmission signals 401 via the radar altimeter. The plurality of transmission signals 401 may be emitted toward terrain beneath the vehicle 101. In doing so, a subset of the transmission signals 401 may reflect off the radio-reflective targets 104A, 104B, 104C, 104D. In some embodiments, the reflected signals are received and measured by the radar altimeter. In some embodiments, the workflow 400 includes generating a respective power and range of the reflected transmission signals 401. For example, as shown in the chart 403, the respective power and range of the reflected signals 401 may be generated and recorded, said power and/or range values being referred to as a "power metric" of the reflected signal. In some embodiments, the workflow 400 includes generating the power metrics based at least in part on a fast Fourier transformation (FFT) of the measurements of the reflected signals. In some embodiments, the respective ranges of the reflected signals are generated based at least in part on the power of the reflected signal or output of an FFT applied to the power of the reflected signal.

In some embodiments, the workflow 400 includes generating a plurality of FFT bins based at least in part on application of FFT to the plurality of reflected signals. The workflow 400 may include determining a first subset of power metrics that are associated with signals reflected by terrain directly below the vehicle 101. The first subset of power metrics may satisfy a minimum power threshold and be within a first predetermined span of range values (indicium 404). The workflow 400 may include determining a second subset of power metrics that are associated with signals reflected by the radio-reflective targets 104A, 104B, 104C, 104D. The second subset of power metrics may satisfy the minimum power threshold and be within a second predetermined span of range values (indicium 406) that is greater than the first predetermined span of range. In some embodiments, the second subset of power metrics satisfy a second minimum power threshold that is greater than the first minimum power threshold.

In some embodiments, the workflow 400 includes generating respective difference values 305 between the subset of power metrics associated with the radio-reflective targets 104A, 104B, 104C, 104D. In some embodiments, the workflow 400 includes generating alignment correction data 117 based at least in part on the difference values 305. In some embodiments, the alignment correction data 117 comprises one or more parameters for adjusting the position of the vehicle. In various embodiments, the parameter is configured to align the vehicle 101 with the landing site 102 such that the difference values 305 are minimized. The one or more parameters may comprise corrective guidance for aligning the vehicle 101 to the landing site 102. The corrective guidance may be rendered on a display of a ground station 103, a display of the vehicle 101, and/or the like. Additionally, or alternatively, in some embodiments, the one or more parameters comprise control commands that may be executed to adjust the position of the vehicle 101. In some embodiments, the alignment correction data 117 comprises a position of the vehicle 101 relative to the landing site 102. The position may include a vertical component (e.g., altitude, height, and/or the like) and a horizontal component. In some embodiments, the alignment correction data 117 indicates one or more directions of movement along a horizontal plane, vertical plane, and/or the like. For example, the alignment correction data 117 may indicate leftward-, rightward-, forward-, or rearward-directed movement.

**In** various embodiments, the workflow 400 includes emitting additional transmission signals during repositioning of the vehicle 101 in accordance with the alignment correction data 117. The workflow 400 may include updating the difference values based on additional reflected signals. In some embodiments, the workflow 400 includes determining whether the vehicle 101 is in an optimal alignment with the landing site 102 based at least in part on the updated difference values. In response to a determination that the vehicle 101 remains misaligned with the landing site 102, additional alignment correction data 117 may be generated to further direct positioning of the vehicle 101.

### Example Processes of the Disclosure

Having described example systems and apparatuses, data architectures, and data flows in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

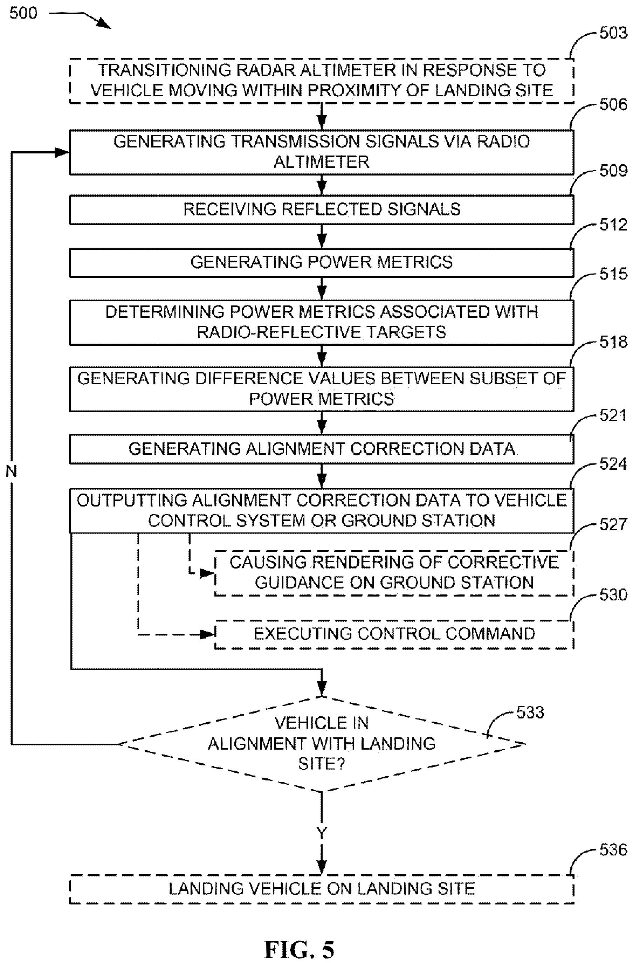

FIG. 5 illustrates a flowchart depicting operations of an example process 500 for aligning a vehicle to a landing site in accordance with at least some example embodiments of the present disclosure. In some embodiments, the process 500 is embodied by computer program code stored on a non-transitory computer-readable storage medium of a computer program product configured for execution to perform the process as depicted and described. Additionally, or alternatively, in some embodiments, the process 500 is performed by one or more specially configured computing devices, such as apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described.

In some embodiments, the apparatus 200 is in communication with one or more internal or external apparatus(es), system(s), device(s), and/or the like, to perform one or more of the operations as depicted and described. For example, the apparatus 200 may communicate with one or more ground stations 103, vehicle traffic systems 105, and/or the like to perform one or more operations of the process 500.

At operation 503, the apparatus 200 optionally includes means such as the alignment correction circuitry 209, the communications circuitry 205, the input/output circuitry 207, the processor 201, and/or the like, or a combination thereof, that transition a radar altimeter of the vehicle from a depowered state to a powered state in response to the vehicle moving within a predetermined proximity of a landing site. For example, the apparatus 200 may transition the radar altimeter 111 to a powered state in response to determining that a current geographic location of the vehicle 101 is within a threshold distance of a landing site location. Alternatively, in some embodiments, the apparatus 200 is configured to transition the radar altimeter 111 to a powered state in response to determining that a current geographic location of the vehicle 101 is within a threshold distance of one or more radio-reflective targets 104 installed at a landing site 102. Alternatively, in some embodiments, the radar altimeter 111 of the vehicle 101 is configured to a powered state continuously during traversal of a travel pathway to the landing site 102.

At operation 506, the apparatus 200 includes means such as the alignment correction circuitry 209, the communications circuitry 205, the input/output circuitry 207, the processor 201, and/or the like, or a combination thereof, that generate a plurality of transmission signals via the radar altimeter of the vehicle. For example, the apparatus 200 may cause the radar altimeter 111 to generate and emit a plurality of transmission signals beneath the vehicle 101. In doing so, the transmission signals may contact and be reflected by terrain beneath the vehicle 101. A subset of the transmission signals may be reflected by the plurality of radio-reflective targets 104 at the landing site 102.

At operation 509, the apparatus 200 includes means such as the alignment correction circuitry 209, the communications circuitry 205, the input/output circuitry 207, the processor 201, and/or the like, or a combination thereof, that receive a plurality of reflected signals. For example, the apparatus 200 may cause the radar altimeter 111 to collect and measure a plurality of reflected signals. A subset of the reflected signals may be associated with the plurality of radio-reflective targets 104.

At operation 512, the apparatus 200 includes means such as the alignment correction circuitry 209, the communications circuitry 205, the input/output circuitry 207, the processor 201, and/or the like, or a combination thereof, that generate a plurality of power metrics based at least in part on the reflected signals. For example, the apparatus 200 may generate a plurality of power metrics 303 based at least in part on signal data 113 comprising reflected signal measurements. A subset of the power metrics 303 may be associated with the subset of radar altimeter signals reflected by the radio-reflective targets 104. In various embodiments, the apparatus 200 generates the power metrics 303 based at least in part on applying FFT to the plurality of reflected signals. In doing so, the apparatus 200 may generate a plurality of FFT bins, where a respective FFT bin is associated with one of the reflected signals.

At operation 515, the apparatus 200 includes means such as the alignment correction circuitry 209, the communications circuitry 205, the input/output circuitry 207, the processor 201, and/or the like, or a combination thereof, that determine a subset of the power metrics that are associated with radar altimeter signals reflected by the radio-reflective targets. For example, the apparatus 200 may compare the power metrics to one or more power metric thresholds to determine a subset of the power metrics that are associated with the radio-reflective targets 104. The subset of the power metrics may fall within a predetermined frequency interval, range interval, power interval, and/or the like. In some embodiments, the apparatus 200 is configured to apply a subset of a plurality of power metric thresholds based at least in part on the landing site 102 nearest to the current location of the vehicle 101. For example, the apparatus 200 may determine a nearest landing site 102 based at least in part on the current location of the vehicle 101, and the apparatus may retrieve a subset of power metric thresholds associated with the determined landing site 102 and radio-reflective targets 104 installed at the site.

In some embodiments, the apparatus 200 is configured to determine whether a total quantity of the subset of power metrics satisfies a threshold quantity. For example, the apparatus 200 may determine whether the subset of power metrics includes at least four power metrics. In response to determining that the subset of power metrics fails to meet the threshold quantity, the apparatus 200 may cause provision of an alert to the control system 109, ground station 103, vehicle traffic system 105, and/or the like. In this manner, the apparatus 200 may determine that one or more radio-reflective targets 104 at the landing site 102 are blocked, removed, disabled, and/or the like. In some embodiments, the threshold quantity is determined based at least in part on the landing site location. For example, different landing sites may be associated with greater or fewer numbers of radio-reflective targets.

At operation 518, the apparatus 200 includes means such as the alignment correction circuitry 209, the communications circuitry 205, the input/output circuitry 207, the processor 201, and/or the like, or a combination thereof, that generate respective difference values between the subset of power metrics. For example, the apparatus 200 may generate a plurality of pair permutations based at least in part on the subset of power metrics associated with radio-reflective targets. The apparatus 200 may generate a difference value for each pair permutation based at least in part on a comparison (e.g., differencing) between the corresponding power metrics.

At operation 521, the apparatus 200 includes means such as the alignment correction circuitry 209, the communications circuitry 205, the input/output circuitry 207, the processor 201, and/or the like, or a combination thereof, that generate alignment correction data based at least in part on the plurality of difference values. For example, the apparatus 200 may generate alignment correction data 117 based at least in part on the difference values of power metrics that are associated with radar altimeter signals reflected from radio-reflective targets. In various embodiments, the alignment correction data 117 is configured to reposition the vehicle 101 to minimize the respective difference values between the subset of power metrics. In some embodiments, the alignment correction data 117 comprises one or more parameters comprising corrective guidance, control commands, and/or the like. For example, the apparatus 200 may generate corrective guidance for output to a vehicle operator, ground station operator, and/or the like. The corrective guidance may include directions of movement, movement distances, and/or the like. As another example, the apparatus 200 may generate a control command comprising executable instructions for moving the vehicle in accordance with one or more directions, distances, and/or the like that result in reductions to the difference values.

At operation 524, the apparatus 200 includes means such as the alignment correction circuitry 209, the communications circuitry 205, the input/output circuitry 207, the processor 201, and/or the like, or a combination thereof, that output the alignment correction data to a vehicle control system, ground station, and/or the like. For example, the apparatus 200 may output the alignment correction data 117 to a control system 109 of the vehicle 101, a ground station 103 configured to monitor and/or control the vehicle 101, and/or the like. Additionally, or alternatively, in some embodiments, the apparatus 200 outputs the alignment correction data 117, relative position of the vehicle to the landing site, and/or the like to a vehicle traffic system 105.

At operation 527, the apparatus 200 includes means such as the alignment correction circuitry 209, the communications circuitry 205, the input/output circuitry 207, the processor 201, and/or the like, or a combination thereof, that cause rendering of corrective guidance on a ground station. For example, the apparatus 200 may cause rendering of a GUI on a display 119 of a ground station 103. The GUI may include indicia that describes a movement direction, movement distance, and/or the like for aligning the vehicle 101 to the landing site 102. Additionally, or alternatively, in some embodiments, the apparatus 200 causes rendering of the corrective guidance on a display of the control system 109 of the vehicle 101. In some embodiments, the apparatus 200 causes output of one or more audio effects by the ground station 103, control system 109, and/or the like. For example, the apparatus 200 may cause a computer voice module to generate and output an audio effect comprising an utterance of one or more movement directions, movement distances, and/or the like.

At operation 530, the apparatus 200 includes means such as the alignment correction circuitry 209, the communications circuitry 205, the input/output circuitry 207, the processor 201, and/or the like, or a combination thereof, that execute a control command for repositioning the vehicle in alignment with the landing site. For example, the apparatus 200 may cause the control system 109 to execute a control command for moving the vehicle 101 along a horizontal plane, vertical plane, and/or the like such that respective differences between the subset of power metrics are minimized. In some embodiments, the apparatus 200 provisions a control command to a ground station 103, vehicle traffic system 105, and/or the like. In some embodiments, the apparatus 200 executes the control command in response to receiving approval from the ground station 103, vehicle traffic system 105, and/or the like.

At operation 533, the apparatus 200 optionally includes means such as the alignment correction circuitry 209, the communications circuitry 205, the input/output circuitry 207, the processor 201, and/or the like, or a combination thereof, that determine whether the vehicle is within alignment with the landing site. For example, the apparatus 200 may determine whether respective difference values between the subset of power metrics satisfy a maximum difference threshold. In response to determining that the vehicle 101 is aligned with the landing site 102, the process 500 may proceed to operation 536. For example, in response to determining that the difference values satisfy the maximum difference threshold, the process 500 may proceed to operation 536. In response to determining that the vehicle 101 is aligned with the landing site 102, the process 500 may proceed to operation 506. In various embodiments, the apparatus 200 iteratively performs operations 506-533 to update the power metrics, generate additional alignment correction data, and output the additional alignment correction data until the vehicle 101 is determined to be in alignment with the landing site 102. For example, the apparatus 200 may repeat operations 506-533 until the apparatus 200 determines that the updated difference values between the subset of power metrics satisfy a maximum difference threshold.

At operation 536, the apparatus 200 optionally includes means such as the alignment correction circuitry 209, the communications circuitry 205, the input/output circuitry 207, the processor 201, and/or the like, or a combination thereof, that land the vehicle on the landing site. For example, the apparatus 200 may cause the control system 109 to land the vehicle 101 on the landing site 102 in response to determining that the respective differences between power metrics of the reflected signals from the plurality of radio-reflective targets 104 satisfy a power metric threshold. In some embodiments, the apparatus 200 receives a control command from the ground station 103 in response to provisioning to the ground station 103 an indication that the vehicle 101 is in alignment with the landing site 102. In some embodiments, the apparatus 200 is configured to automatically cause the vehicle 101 to land in response to determining that the vehicle is in alignment with the landing site (e.g., difference values between reflected signals being at or below a predetermined threshold).

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method, comprising:
generating a transmission signal via a radar altimeter onboard a vehicle, the vehicle being oriented proximate to a landing site comprising a plurality of radio-reflective targets;
receiving, via the radar altimeter, a plurality of reflected signals;
generating a plurality of power metrics based at least in part on the plurality of reflected signals;
comparing the plurality of power metrics to at least one threshold to determine a subset of power metrics that are associated with the plurality of radio-reflective targets;
generating alignment correction data based at least in part on respective difference values between the subset of power metrics; and
causing output of the alignment correction data to at least one of a ground station configured to control the vehicle or a control system onboard the vehicle, wherein the alignment correction data comprises at least one parameter for aligning the vehicle with the landing site to minimize the respective difference values.

2. The computer-implemented method of claim 1, wherein:
the at least one parameter comprises corrective guidance configured to align the vehicle with the landing site to minimize the respective difference values; and
the method further comprises:
provisioning the alignment correction data to the ground station to cause rendering of the corrective guidance on at least one display of the ground station.

3. The computer-implemented method of claim 2, further comprising:
causing output of at least one audio effect at the ground station, wherein the at least one audio effect comprises a computer voice instruction based at least in part on the corrective guidance.

4. The computer-implemented method of claim 1, wherein:
the at least one parameter comprises a control command configured to, in execution with a control system onboard the vehicle, align the vehicle with the landing site to minimize the respective difference values.

5. The computer-implemented method of claim 4, further comprising:
executing the control command via the control system onboard the vehicle to align the vehicle to the landing site.

6. The computer-implemented method of claim 5, further comprising:
provisioning to the ground station a request to execute the control command; and
executing the control command via the control system onboard the vehicle in response to receiving an approval of the request from the ground station.

7. The computer-implemented method of claim 1, further comprising:
applying fast Fourier transformation (FFT) to the plurality of reflected signals to generate the plurality of power metrics, wherein a respective power metric comprises an FFT bin.

8. The computer-implemented method of claim 1, further comprising:
iteratively updating the respective difference values based at least in part on additional reflected signals received via the radar altimeter during movement of the vehicle in accordance with the alignment correction data; and
causing additional movement of the vehicle along a horizontal plane in at least one of a forward, rearward, leftward, or rightward direction to reduce the respective difference values.

9. An apparatus comprising at least one processor and at least one non-transitory memory having computer-coded instructions stored thereon that, in execution with at least one processor, cause the apparatus to:
generate a transmission signal via a radar altimeter onboard a vehicle, the vehicle being oriented proximate to a landing site comprising a plurality of radio-reflective targets;
receive, via the radar altimeter, a plurality of reflected signals;
generate a plurality of power metrics based at least in part on the plurality of reflected signals;
compare the plurality of power metrics to at least one threshold to determine a subset of power metrics that are associated with the plurality of radio-reflective targets;
generate alignment correction data based at least in part on respective difference values between the subset of power metrics; and
cause output of the alignment correction data to at least one of a ground station configured to control the vehicle or a control system onboard the vehicle, wherein the alignment correction data comprises at least one parameter for aligning the vehicle with the landing site to minimize the respective difference values.

10. The apparatus of claim 9, wherein:
the computer-coded instructions, in execution with the at least one processor, further cause the apparatus to:
generate a position of the vehicle relative to the landing site based at least in part on the respective difference values, wherein the position comprises a vertical component and a horizontal component; and
provision the position to a vehicle traffic system.

11. The apparatus of claim 9, wherein:
the computer-coded instructions, in execution with the at least one processor, further cause the apparatus to:
transition the radar altimeter from a depowered state to a powered state in response to a determination that the vehicle is located within a predetermined proximity of the landing site.

12. The apparatus of claim 9, wherein:
the at least one non-transitory memory is configured to store a plurality of power metric thresholds, wherein a respective power metric threshold is associated with one of a plurality of landing sites; and
the computer-coded instructions, in execution with the at least one processor, further cause the apparatus to:
generate, based at least in part on a location of the vehicle, a respective distance between the vehicle and the plurality of landing sites;
determine a nearest landing site based at least in part on the distances; and
retrieve the at least one threshold from the at least one non-transitory memory based at least in part on the nearest landing site.

13. The apparatus of claim 12, wherein:
the plurality of landing sites comprises a first landing site and a second landing site;
the first landing site comprises a first plurality of radio-reflective targets associated with a first separation distance;
the second landing site comprises a second plurality of radio-reflective targets associated with a second separation distance that is different from the first separation distance; and
the first landing site and the second landing site are associated with different values of power metric threshold.

14. The apparatus of claim 9, wherein:
the computer-coded instructions, in execution with the at least one processor, further cause the apparatus to:
update the respective difference values based at least in part on additional reflected signals received via the radar altimeter during movement of the vehicle in accordance with the alignment correction data; and
in response to a determination that the respective difference values are less than a threshold difference, cause the vehicle to land on the landing site.

15. A computer program product comprising at least one non-transitory computer-readable storage medium having computer program code stored thereon that, in execution with at least one processor, is configured to:
generate a transmission signal via a radar altimeter onboard a vehicle, the vehicle being oriented proximate to a landing site comprising a plurality of radio-reflective targets;
receive, via the radar altimeter, a plurality of reflected signals;
generate a plurality of power metrics based at least in part on the plurality of reflected signals;
compare the plurality of power metrics to at least one threshold to determine a subset of power metrics that are associated with the plurality of radio-reflective targets;
generate alignment correction data based at least in part on respective difference values between the subset of power metrics; and
cause output of the alignment correction data to at least one of a ground station configured to control the vehicle or a control system onboard the vehicle, wherein the alignment correction data comprises at least one parameter for aligning the vehicle with the landing site to minimize the respective difference values.
